# FASCICULE DE BREVET EUROPEEN

(11) **EP 1 691 214 B1**
(45) Date de publication et mention de la délivrance du brevet: **07.12.2016**
(21) Numéro de dépôt: 06290244.0
(22) Date de dépôt: 13.02.2006
(51) Int. Cl.: G01S 15/46, G01S 5/28

(54) **Système de détérmination de la position absolue d'un engin sous-marin remorqué ou autopropulsé**
System zur Bestimmung der absoluten Position eines geschleppten Unterwasserfahrzeugs oder eines Unterwasserfahrzeugs mit Selbstantrieb
System for determining the absolute position of a towed or self-propelled submarine engine

(30) Priorité: 15.02.2005 FR 0501534
(43) Date de publication de la demande: 16.08.2006
(73) Titulaire: DCN, 75015 Paris (FR)
(72) Inventeur: Thomas, Hubert, 13100 Le Tholonet (FR)
(74) Mandataire: Lavoix

(56) Documents cités:
- FR-A- 2 785 993
- FR-A- 2 851 340
- US-A- 4 315 326
- US-B1- 6 532 192
- AUSTIN T C ET AL: "RATS, a Relative Acoustic Tracking System developed for deep ocean navigation" OCEANS '97. MTS/IEEE CONFERENCE PROCEEDINGS HALIFAX, NS, CANADA 6-9 OCT. 1997, NEW YORK, NY, USA,IEEE, US, vol. 1, 6 octobre 1997 (1997-10-06), pages 535-540, XP010246302 ISBN: 0-7803-4108-2
- ALLEN B ET AL: "REMUS: a small, low cost AUV; system description, field trials and performance results" OCEANS '97. MTS/IEEE CONFERENCE PROCEEDINGS HALIFAX, NS, CANADA 6-9 OCT. 1997, NEW YORK, NY, USA,IEEE, US, vol. 2, 6 octobre 1997 (1997-10-06), pages 994-1000, XP010246110 ISBN: 0-7803-4108-2
- CREED E L ET AL: "Real-time data transmission between research vessel and shore command center" OCEANS 2000 MTS/IEEE CONFERENCE AND EXHIBITION SEPT. 11-14, 2000, PISCATAWAY, NJ, USA,IEEE, vol. 2, 11 septembre 2000 (2000-09-11), pages 1153-1157, XP010520974 ISBN: 0-7803-6551-8
- WESTON J L ET AL: "MODERN INERTIAL NAVIGATION TECHNOLOGY AND ITS APPLICATION", ELECTRONICS AND COMMUNICATION ENGINEERING JOURNAL, INSTITUTION OF ELECTRICAL ENGINEERS, LONDON, GB, vol. 12, no. 2, 1 April 2000 (2000-04-01), pages 49-64, XP001052317, ISSN: 0954-0695, DOI: 10.1049/ECEJ:20000202
- Bjørn Jalving ET AL: "1. DETAILED SEABED SURVEYS WITH AUVs" In: "Technology and Applications of Autonomous Underwater Vehicles", 1 January 2003 (2003-01-01), XP055213777, vol. 1026, pages 179-201,

## Description

La présente invention concerne un système de détermination de la position absolue d'un engin sous-marin.

Plus particulièrement, l'invention concerne un système dans lequel cet engin sous-marin est relié à un engin de remorquage, par un câble de remorque et des moyens de transmission d'informations bidirectionnels.

Dans la suite de la description, l'expression « engin sous-marin » est utilisée pour désigner un engin sous-marin remorqué ou autopropulsé.

L'expression « engin de remorquage » est utilisée pour désigner tout engin permettant d'assurer la mise en oeuvre de cet engin sous-marin, c'est-à-dire par exemple un navire remorqueur tractant l'engin sous-marin par le câble de remorque lorsque cet engin sous-marin est un engin sous-marin remorqué ou un navire autour duquel l'engin sous-marin peut évoluer dans le cas où cet engin sous-marin est autopropulsé. Dans ce cas, l'expression « câble de remorque » doit alors être comprise comme désignant par exemple un câble ombilical s'étendant entre le navire et l'engin sous-marin autopropulsé.

Le domaine de l'invention est donc celui de la localisation sous-marine par ondes radioélectriques, acoustiques et par des techniques inertielles.

Elle a plus particulièrement pour objet la détermination des coordonnées géographiques précises d'un engin sous-marin, ainsi que la mesure de son attitude dans un référentiel absolu.

Il existe déjà dans l'état de la technique différents systèmes de détermination de ce type qui permettent de localiser des engins sous-marins en utilisant en général la propagation d'ondes acoustiques.

Un premier système connu consiste à doter l'engin sous-marin à localiser, d'un émetteur-récepteur d'ondes acoustiques et à disposer à bord de l'engin de remorquage, un réseau d'hydrophones.

L'engin de remorquage interroge alors à cadence régulière, l'engin sous-marin. La mesure des temps de propagation à l'aller et au retour des ondes acoustiques, permet, en connaissant la célérité du son dans l'eau, d'en déduire la distance entre l'engin de remorquage et l'engin sous-marin remorqué.

Les mesures de déphasage ou différentielles des instants d'arrivée des ondes en retour sur les hydrophones, fixés sur la coque de l'engin de remorquage, permettent de plus, de déterminer la direction de l'engin sous-marin dans un référentiel lié à l'engin de remorquage.

La mesure au même instant du cap de l'engin de remorquage ainsi que de ses angles de roulis et de tangage, permet, en connaissant la position géographique de celui-ci, de calculer la position de l'engin sous-marin dans un référentiel géographique lié aux axes de la terre.

Ces systèmes bien connus dans l'état de la technique sont également appelés « bases courtes ou ultra courtes » selon la distance séparant les hydrophones.

De tels systèmes peuvent être améliorés en déclenchant l'émission acoustique par un signal électrique transmis dans le câble de remorquage entre l'organe de remorquage et l'engin sous-marin.

Cependant, les performances de tels systèmes sont relativement limitées en raison de la présence de phénomènes de cavitation et des conditions environnementales, autour de l'engin de remorquage, les équipements tels que les hydrophones étant alors fortement bruités voire inopérants.

Le brevet US-6 532 192 décrit un perfectionnement à ces systèmes acoustiques, en utilisant des horloges synchrones sans toutefois apporter une solution aux problèmes du bruit ambiant et de mauvaises conditions de propagation des ondes.

D'autres systèmes consistent à installer à bord de l'engin sous-marin, une centrale inertielle et à compenser sa dérive à long terme, en utilisant un capteur de vitesse, mettant en oeuvre en général des ondes acoustiques et par mesure de l'effet Doppler.

Le calage en coordonnées géographiques et l'alignement de la centrale sont en général effectués en surface et nécessitent des procédures spécifiques très longues rendant l'engin sous-marin inopérant pendant par exemple une durée d'environ 30 minutes.

Une fois l'engin sous-marin immergé, l'utilisation de la mesure de vitesse permet de limiter la dérive inertielle à une erreur de position de quelques mètres à l'heure. Cependant, une telle précision n'est pas suffisante dans le type d'applications envisagées et ce, d'autant plus que la mesure de vitesse Doppler est entachée d'erreurs dès lors que les fonds sous-marins présentent un fort gradient ou plus simplement, lorsque la distance entre l'engin sous-marin et le fond est trop importante.

Le document AUSTIN T C et AL XP 0110246302, volume 1 décrit un système de détermination de la position absolue d'un engin sous-marin relié à un engin de remorquage, par un câble de remorque et des moyens de transmission d'informations bidirectionnelles.

Cependant, le système décrit dans ce document présente également un certain nombre d'inconvénients, notamment au niveau de la précision de positionnement obtenue.

Des systèmes analogues, tels que décrits dans les documents « RATS, A relative acoustic tracking system developed for deep ocean navigation » de Thomas C. Austin et «Detailed seabed surveys with AUVs » de Bjorn Jalving présentent les mêmes inconvénients.

D'une façon générale, le but de l'invention est donc de proposer un système qui permette de déterminer, avec une grande précision et à haute cadence, la position d'un engin sous-marin et de mesurer son attitude afin de pouvoir référencer en coordonnées absolues le relief des fonds marins, d'éventuels objets par exemple posés sur ces fonds marins et/ou des structures géologiques de la croûte terrestre.

A cet effet, l'invention a pour objet un système de détermination de la position absolue d'un engin sous-marin remorqué ou autopropulsé selon la revendication 1.

Selon d'autres caractéristiques de l'invention, le système comprend une ou plusieurs des caractéristiques des revendications 2 à 28.

L'invention sera mieux comprise à la lecture de la description qui va suivre, donnée uniquement à titre d'exemple et faite en se référant aux dessins annexés, sur lesquels :
- la Fig.1 illustre la structure générale d'un système de détermination selon l'invention ; et
- la Fig.2 représente un schéma synoptique illustrant les différents organes mis en oeuvre dans un système de détermination selon l'invention.

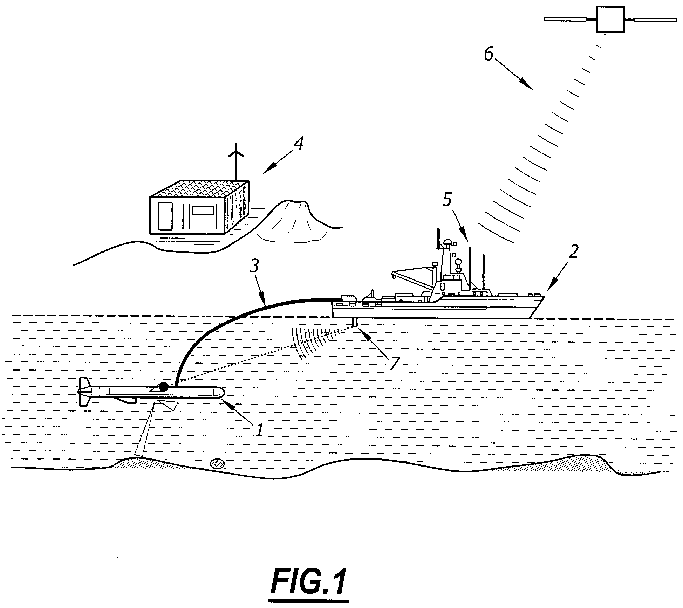

On a en effet illustré sur la figure 1, la structure générale d'un exemple de réalisation d'un système de détermination selon l'invention.

Dans l'exemple de réalisation qui va être décrit, l'engin sous-marin est un engin sous-marin remorqué.

Bien entendu, l'invention est également applicable à des engins sous-marins autopropulsés comme cela a été mentionné précédemment.

En fait, ce système de détermination permet de déterminer la position absolue d'un engin sous-marin par exemple remorqué, désigné par la référence générale 1 sur cette figure, dans lequel cet engin sous-marin est relié à un engin de remorquage désigné par la référence générale 2, par un câble de remorque et des moyens de transmission d'informations bidirectionnels, désignés par la référence générale 3, de façon classique.

Un centre d'opérations désigné par la référence générale 4 peut également être mis en oeuvre comme cela sera décrit plus en détail par la suite.

Ce centre d'opérations 4 peut par exemple être formé par une base terrestre ou être lui-même hébergé sur un navire ou un aéronef quelconque par exemple.

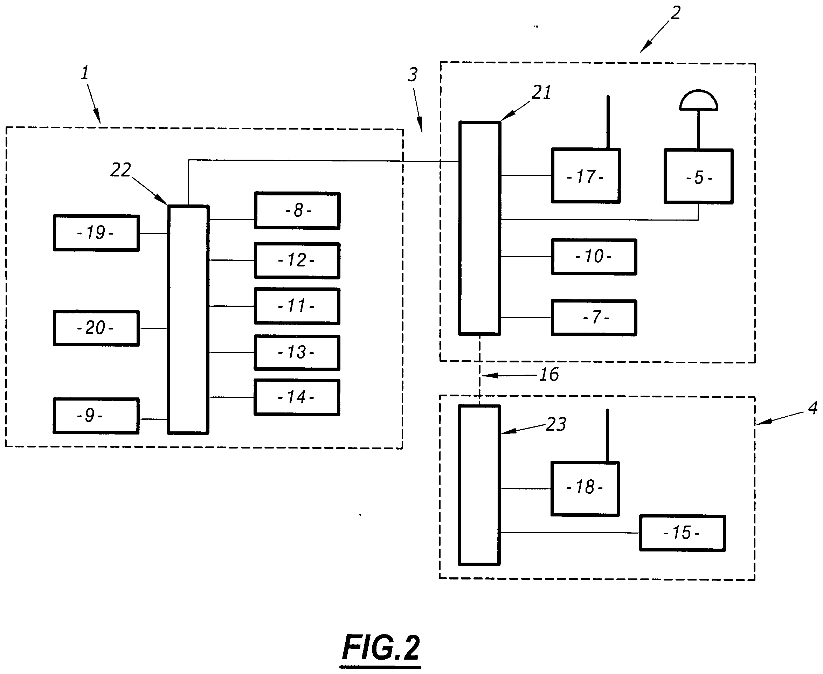

En fait et comme cela est illustré sur ces figures 1 et 2, dans ce système, l'engin de remorquage 2 comporte des moyens de positionnement absolu en coordonnées géographiques, délivrant des informations de position de celui-ci en coordonnées géographiques.

Ces moyens sont désignés par la référence générale 5 sur cette figure et comprennent par exemple un récepteur de radiolocalisation de celui-ci. Ce récepteur de radiolocalisation peut par exemple être un récepteur de radiolocalisation par satellites, de type GPS ou autres, ce système étant désigné par la référence générale 6.

L'engin sous-marin remorqué comporte quant à lui des moyens de localisation relative par rapport à l'engin de remorquage, délivrant des informations de localisation relative de cet engin sous-marin par rapport à l'engin de remorquage et une centrale d'attitude et de cap délivrant des informations d'attitude et de cap de cet engin sous-marin.

Dans l'exemple de réalisation décrit sur ces figures, ces moyens de localisation relative de l'engin sous-marin par rapport à l'engin de remorquage, comportent un distancemètre-goniomètre à ondes acoustiques, dont une partie d'émission d'ondes désignée par la référence générale 7 sur ces figures, est montée sur l'engin de remorquage 2, par exemple sur la coque de celui-ci, et dont une partie de réception d'ondes désignée par la référence générale 8 sur la figure 2, est montée sur l'engin sous-marin 1.

Cet engin sous-marin est également muni d'une centrale d'attitude et de cap délivrant des informations d'attitude et de cap de cet engin sous-marin, cette centrale étant désignée par la référence générale 9 sur cette figure.

En fait, cette centrale d'attitude et de cap 9 peut par exemple être formée par une centrale inertielle comme cela sera décrit plus en détail par la suite.

Une autre centrale d'attitude et de cap peut également être intégrée dans l'engin de remorquage 2, cette centrale étant désignée par la référence générale 10 sur cette figure 2.

Enfin, le système selon l'invention comporte également des moyens de corrélation de ces différentes informations, pour délivrer des informations de position absolue de l'engin sous-marin.

Ces moyens de corrélation seront décrits plus en détail par la suite.

On notera cependant que ces moyens peuvent être en outre raccordés à des moyens de détermination d'informations de correction de position de la partie d'émission d'ondes 7 du distancemètre-goniomètre, par rapport au récepteur de radiolocalisation 5 sur l'engin de remorquage 2.

L'engin sous-marin est également équipé de moyens d'exploration de l'environnement sous-marin.

Ces moyens peuvent présenter différentes formes et peuvent comprendre par exemple au moins l'un des organes choisis dans le groupe comprenant un sonar, un sondeur, un scanner à laser, une caméra et un capteur magnétométrique ou gravimétrique.

Un tel sonar est par exemple illustré et désigné par la référence générale 11 sur cette figure 2.

Dans ce cas, les moyens de corrélation sont raccordés également à des moyens de détermination d'informations de correction de position des moyens d'exploration, par rapport à la partie de réception d'ondes acoustiques 8, du distancemètre-goniomètre, sur l'engin sous-marin.

Un tel système peut également comporter des moyens de recalage de la centrale d'attitude et de cap 9 de l'engin sous-marin 1 à partir d'informations de position et/ou de vitesse de cet engin sous-marin, délivrées par exemple par les moyens de corrélation.

On notera que l'engin sous-marin peut être muni de moyens complémentaires, tels que par exemple un échosondeur désigné par la référence générale 12, un loch désigné par la référence générale 13 ou encore un capteur de pression permettant de déterminer la profondeur d'immersion, désigné par la référence générale 14.

Les moyens de transmission d'informations 3 entre l'engin de remorquage et l'engin sous-marin peuvent quant à eux comprendre un réseau filaire ou encore un réseau optique.

Dans l'exemple de réalisation illustré, l'engin de remorquage est un navire muni d'un équipage, mais un engin inhabité peut également être envisagé.

Il peut alors être intéressant de déporter différents traitements d'informations dans le centre d'opérations terrestre 4.

Dans ce cas, un calculateur désigné par la référence générale 15 sur cette figure 2, est implanté dans ce centre d'opérations 4 et ceux-ci, c'est-à-dire ce centre d'opérations et ce calculateur 15, sont raccordés à l'engin de remorquage 2 par une liaison radioélectrique bidirectionnelle désignée par la référence générale 16 sur cette figure, permettant d'échanger des informations entre des moyens d'émission-réception d'informations correspondants, désignés par les références générales respectives 17et 18, pour l'engin de remorquage 2 et le centre d'opérations 4.

On notera enfin qu'un calculateur désigné par la référence générale 19 peut également être embarqué à bord de l'engin sous-marin remorqué 1, et qu'un autre calculateur peut également être embarqué à bord de l'engin de remorquage 2.

Comme cela a été indiqué précédemment, les moyens de localisation 7, 8, la centrale d'attitude et de cap 9, les moyens de positionnement 5, 6 et les moyens d'exploration 11 peuvent partager une référence de temps commune distribuée entre l'engin de remorquage 2 et l'engin sous-marin 1.

Cette référence de temps commune peut alors être un signal d'horloge, ce signal d'horloge étant issu par exemple du récepteur de radiolocalisation 5 tel que par exemple le récepteur GPS ou le récepteur à bases terrestres.

On sait en effet que de tels systèmes de radiolocalisation utilisent une référence temporelle qu'il est alors possible de récupérer et de répartir entre les différents organes et moyens qui ont été décrits précédemment, afin de synchroniser leur fonctionnement, ce qui permet d'améliorer la précision des mesures effectuées.

Cependant, un signal d'horloge interne émanant de moyens de génération indépendants des moyens de radiolocalisation, peut également être envisagé, celui-ci pouvant être par exemple issu de moyens de génération locaux implantés dans le système.

Selon une variante de réalisation, la référence de temps commune distribuée entre l'engin de remorquage et l'engin sous-marin, sert à la datation des différentes mesures en vue d'un traitement ultérieur des informations.

C'est ainsi par exemple que l'on a illustré sur la figure 2, des moyens électroniques de datation désignés par la référence générale 20, permettant de dater par exemple les informations issues de la centrale de cap et d'attitude 9 et du sonar 11 de l'engin sous-marin, etc...

Les différentes mesures des différents moyens d'acquisition étant alors datées par une référence de temps commune, entre les différents organes décrits précédemment, ceci permet également d'améliorer la précision des résultats obtenus.

Les informations datées sont alors des informations délivrées par les moyens de positionnement 5, 6, les moyens de localisation 7, 8, la centrale d'attitude et de cap 9 et les moyens d'exploration 11 des fonds sous-marins.

Enfin, des moyens d'interconnexion 21, 22 et 23, implantés respectivement dans l'engin de remorquage 2, dans l'engin sous-marin remorqué 1 et dans le centre d'opérations terrestre 4, permettent d'assurer la communication des différentes informations entre ces différents organes.

Ainsi, des opérations telles que par exemple des traitements d'informations et des calculs de position peuvent être réalisés dans tel ou tel engin ou centre ou réparties entre ces différents organes.

C'est ainsi par exemple que les moyens de corrélation peuvent être implantés au moins en partie dans l'engin de remorquage 2 ou dans l'engin sous-marin 1 et être intégrés par exemple en partie dans la centrale d'attitude et de cap 9 et/ou du calculateur 19 de cet engin sous-marin.

Cependant, les moyens de corrélation peuvent également être implantés au moins en partie dans le centre d'opérations terrestre et plus particulièrement dans le calculateur 15 de celui-ci ou dans celui embarqué à bord de l'engin de remorquage.

Ces différents moyens de corrélation sont alors mis en oeuvre par les calculateurs intégrés dans différents organes et programmés à cet effet.

On conçoit alors que dans un tel système, l'engin de remorquage 2 est doté du récepteur de radiolocalisation 5, par exemple par satellite, et de l'émetteur de signaux acoustiques 7 dont le fonctionnement est par exemple déclenché de façon synchrone, en exploitant les signaux d'horloge du récepteur de radiolocalisation.

A bord de l'engin sous-marin remorqué, un calculateur reçoit les informations relatives au vecteur de l'engin de remorquage issues du distancemètre-goniomètre, et les informations de cap et d'attitude de l'engin sous-marin délivrées par la centrale d'attitude et de cap 9.

De cette façon, il est possible de calculer de façon très précise, les coordonnées de l'engin sous-marin, et de géoréférencer des objets posés sur le fond marin, qui seraient vus dans le faisceau par exemple du sonar 11. Le capteur de pression 14 est utilisé pour calculer avec précision l'immersion de l'engin en connaissant la densité moyenne de l'eau dans la zone de travail.

Le récepteur de radiolocalisation GPS 5 fonctionne par exemple en mode différentiel, et les informations de position de l'engin de remorquage 2 sont transmises par exemple au calculateur 19 de l'engin sous-marin à travers le câble de remorque 3.

Le signal d'horloge issu du récepteur de radiolocalisation 5 permet de synchroniser les émissions acoustiques par rapport au référentiel temporel absolu par exemple. La centrale d'attitude et de cap 10 à bord de l'engin de remorquage permet de déterminer l'orientation dans un plan horizontal du vecteur séparant la tête de l'émetteur acoustique 7 de l'antenne du récepteur 5 de signaux GPS, en vue de permettre la détermination exacte de la position géographique de l'émetteur acoustique au moment des émissions, afin de prendre en compte des informations de correction de position correspondantes.

A bord de l'engin sous-marin remorqué, le distancemètre-goniomètre 8 reçoit le signal d'horloge en provenance du récepteur GPS 5, détecte les signaux acoustiques et en détermine les instants d'arrivée par rapport au référentiel temporel absolu. La fonction de goniométrie permet de déterminer le relèvement d'où vient le signal acoustique en provenance de l'émetteur 7 de l'engin de remorquage. Ces informations sont transmises par exemple au calculateur intégré 19 et les instants d'émission des signaux acoustiques étant connus du calculateur, ce dernier est à même, en connaissant la célérité du son dans l'eau, de déterminer la distance oblique à l'émetteur acoustique 7 situé sur l'engin de remorquage 2.

La distance verticale est calculée en connaissant l'immersion de l'engin sous-marin 1 par la connaissance de la pression, telle que mesurée par le capteur de pression 14 et en connaissant la densité moyenne de l'eau à la verticale des engins.

Enfin, pour localiser de façon très précise, selon les axes de l'engin sous-marin, un objet posé sur le fond, on utilise un dispositif de type sonar dont la précision de localisation est améliorée en prenant en compte les informations de correction de position par rapport à la partie de réception 8 du distancemètre-goniomètre et si nécessaire en connaissant la distance engin-fond à l'aide de l'échosondeur 12. La position de l'objet est finalement calculée en connaissant le cap et l'attitude de l'engin sous-marin tels que déterminés par la centrale de cap et d'attitude 9, à partir de la position géographique de l'engin de remorquage, en faisant la somme des quatre vecteurs suivants : antenne GPS 5 vers émetteur acoustique 7, émetteur acoustique 7 vers distancemètre-goniomètre 8, distancemètre-goniomètre 8 vers sonar 11 et sonar 11 vers objet.

Le vecteur antenne GPS 5 vers émetteur acoustique 7 nécessite la connaissance du cap suivi par l'engin de remorquage 2. Cette information peut être issue du vecteur vitesse délivré par le récepteur GPS 5 ou de la centrale d'attitude et de cap 10 embarquée à bord de l'engin de remorquage.

On notera également que cette centrale d'attitude et de cap 10, embarquée à bord de l'engin de remorquage 2, peut également être une centrale inertielle et être associée à des moyens de recalage à partir d'informations de position et/ou de vitesse de celui-ci, délivrées par les moyens de corrélation et/ou par les moyens de positionnement en coordonnées géographiques absolues.

Dans le cas d'un engin de remorquage inhabité, une liaison radioélectrique peut être utilisée pour transmettre vers le centre d'opérations terrestre les informations précédemment acquises et/ou calculées. Le calculateur 15 intégré dans ce centre sert alors d'interface graphique conviviale avec un opérateur.

Selon un mode de réalisation particulier, la centrale d'attitude et de cap 9 embarquée à bord de l'engin sous-marin est une centrale inertielle.

Comme cela a été indiqué précédemment, le calculateur de cette centrale inertielle 9 peut alors servir également à centraliser l'ensemble des données acquises en vue de leur corrélation.

Avantageusement, les résultats du calcul de la position et de la vitesse résultant des traitements effectués par les différents calculateurs, sont injectés dans cette centrale d'attitude et de cap afin de corriger l'erreur de cap résultant d'une mauvaise connaissance de la composante nord du vecteur vitesse ou de l'attitude de l'engin sous-marin remorqué. Dans l'hypothèse où la centrale d'attitude et de cap est une centrale inertielle, ce bouclage permet de corriger les éventuelles erreurs d'alignement, celles liées notamment aux biais et aux imperfections des gyroscopes et accéléromètres, aux oscillations de Schuler ainsi que les erreurs propres au traitement numérique dues notamment au séquencement, à la troncation des fonctions numériques et aux schémas d'intégration.

Bien entendu, un récepteur de radiolocalisation autre que par satellites peut également être envisagé tel que par exemple un système de localisation radioélectrique exploitant des stations terrestres de façon classique.

Comme cela a été indiqué précédemment, il y a de nombreuses circonstances et notamment en environnement militaire, dans lequel il est avantageux que l'engin de remorquage soit inhabité. Il peut alors dans ce cas s'avérer intéressant de transmettre les résultats des calculs de position vers le centre terrestre déporté en utilisant la liaison radioélectrique 16.

Par ailleurs et compte tenu des haut débits d'informations transitant sur le câble de remorque 3, il peut être intéressant de substituer à des conducteurs filaires, une ou plusieurs fibres optiques et les dispositifs de multiplexage de données correspondants.

Ces dispositifs permettent notamment une transmission fiable et immédiate sans décalage du signal d'horloge issu du récepteur GPS afin de le restituer à bord de l'engin sous-marin remorqué.

Selon le mode de réalisation particulier décrit, il est avantageux de distribuer le signal de référence de temps absolu, par exemple issu de l'équipement de radiolocalisation, tant à bord de l'engin de remorquage que de l'engin sous-marin remorqué.

En effet, il est fondamental de synchroniser et/ou de dater avec précision les mesures en provenance des différents capteurs afin de synchroniser leur fonctionnement et/ou que le traitement de fusion puisse prendre en compte les éventuels décalages temporels.

En injectant ce signal d'horloge au niveau du distancemètregonomiètre, il est également possible en datant l'instant d'arrivée des signaux acoustiques en provenance de l'émetteur acoustique, de connaître le temps de propagation du signal et donc le module du vecteur émetteur - engin sous-marin remorqué avec grande précision et ce, sans avoir recours à l'utilisation des techniques traditionnelles basées sur la mesure du temps de propagation d'un aller/retour d'un signal acoustique.

Toujours dans un même esprit de maîtrise du temps, il est également possible d'adjoindre aux différents capteurs, les moyens électroniques destinés à la datation avec une précision de l'ordre de la milliseconde, des différentes mesures. Un tel dispositif est souhaitable lorsque les capteurs ne disposent pas en interne de cette faculté et pour permettre la fusion ultérieure des données sans introduire d'erreurs liées aux problèmes d'asynchronisme.

Ceci est particulièrement important pour les mesures susceptibles de présenter un fort gradient, tel que le cap fluctuant d'un engin sous-marin remorqué.

Enfin, le système selon l'invention permet donc de référencer en coordonnées géographiques des objets ou des structures observés dans l'environnement sous-marin tel que par exemple sur le fond. Il convient alors de doter l'engin remorqué d'une charge utile permettant d'observer ou de détecter ces objets ou structures.

A cet effet, on peut utiliser des capteurs acoustiques tels que des sonars ou des sondeurs, des caméras optiques, des scanners à laser ou encore des capteurs magnétométriques ou gravimétriques ou autres.

On a donc décrit précédemment, l'utilisation d'un tel système pour la détermination de la position absolue d'un engin sous-marin remorqué.

Cependant, comme cela a été indiqué précédemment, un tel système est également utilisable pour la détermination de la position d'un engin sous-marin autopropulsé capable d'évoluer autour de l'engin de remorquage.

Bien entendu, d'autres modes de réalisation encore de ce système peuvent être envisagés.

## Revendications

1. Système de détermination de la position absolue d'un engin sous-marin remorqué ou autopropulsé (1), dans lequel cet engin sous-marin (1) est relié à un engin de remorquage (2), par un câble de remorque et des moyens de transmission d'informations bidirectionnels (3),
l'engin de remorquage (2) comportant des moyens (5,6) de positionnement absolu en coordonnées géographiques délivrant des informations de position de celui-ci en coordonnées géographiques, les moyens (5,6) de positionnement en coordonnées géographiques de l'engin de remorquage (2) comprenant un récepteur (5) de radiolocalisation de celui-ci,
l'engin sous-marin (1) comportant des moyens (8) de localisation relative par rapport à l'engin de remorquage (2), délivrant des informations de localisation relative de cet engin sous-marin (1) par rapport à l'engin de remorquage (2) et une centrale (9) d'attitude et de cap délivrant des informations d'attitude et de cap de cet engin sous-marin, ces moyens de localisation (8), la centrale d'attitude et de cap (9) étant une centrale inertielle,
le système comportant également des moyens (9 ; 19 ; 15) de corrélation des informations de position de l'engin de remorquage, de localisation, d'attitude et de cap pour délivrer des informations de position absolue de l'engin sous-marin (1) et avantageusement pour délivrer également des informations de vitesse de l'engin sous-marin,
**caractérisé en ce que** cette centrale (9) et ces moyens de positionnement (5,6) partagent une référence de temps commune distribuée entre l'engin de remorquage (2) et l'engin sous-marin (1), la référence de temps commune étant un signal d'horloge issu du récepteur de radiolocalisation (5),
et **en ce que** le système comporte des moyens de recalage de la centrale d'attitude et de cap (9) de l'engin sous-marin (1) à partir d'informations de position absolue et/ou de vitesse de celui-ci issues des moyens de corrélation.

2. Système selon la revendication 1, **caractérisé en ce que** le récepteur de radiolocalisation est un récepteur de radiolocalisation par satellites (5).

3. Système selon la revendication 1, **caractérisé en ce que** le récepteur de radiolocalisation est un récepteur de radiolocalisation par stations terrestres.

4. Système selon l'une quelconque des revendications précédentes, **caractérisé en ce que** les moyens (8) de localisation relative de l'engin sous-marin (1) par rapport à l'engin de remorquage (2) comprennent un distancemètre-goniomètre à ondes acoustiques, dont une partie d'émission d'ondes (7) est montée sur l'engin de remorquage (2) et dont une partie de réception d'ondes (8) est montée sur l'engin sous-marin (1).

5. Système selon l'une quelconque des revendications précédentes, **caractérisé en ce que** le signal d'horloge est issu des moyens de génération locaux implantés dans le système.

6. Système selon l'une quelconque des revendications précédentes, **caractérisé en ce que** les moyens de corrélation (9 ; 19 ; 15) sont raccordés en outre à des moyens de détermination d'informations de correction de position de la partie d'émission d'ondes (7) du distancemètre-goniomètre, par rapport au récepteur de radiolocalisation (5), sur l'engin de remorquage (2).

7. Système selon l'une quelconque des revendications précédentes, **caractérisé en ce que** l'engin sous-marin (1) est équipé de moyens (11) d'exploration de l'environnement sous-marin.

8. Système selon la revendication 7, **caractérisé en ce que** les moyens d'exploration (11) comprennent au moins un organe choisi dans le groupe comprenant :
- un sonar,
- un sondeur,
- un scanner à laser,
- une caméra, et
- un capteur magnétométrique ou gravimétrique.

9. Système selon l'une quelconque des revendications 1 à 6 et 7 ou 8, **caractérisé en ce que** les moyens de corrélation (9 ; 19 ; 15) sont raccordés en outre à des moyens de détermination d'informations de correction de position des moyens d'exploration (11), par rapport à la partie de réception d'ondes acoustiques (8) du distancemètre-goniomètre, sur l'engin sous-marin (1).

10. Système selon l'une quelconque des revendications précédentes, **caractérisé en ce que** les moyens de corrélation sont implantés au moins en partie dans l'engin de remorquage (2).

11. Système selon l'une quelconque des revendications 1 à 9, **caractérisé en ce que** les moyens de corrélation (9 ; 19) sont implantés au moins en partie dans l'engin sous-marin (1).

12. Système selon la revendication 11, **caractérisé en ce qu'**au moins une partie des moyens de corrélation est intégrée dans la centrale d'attitude et de cap (9) de l'engin sous-marin (1).

13. Système selon l'une quelconque des revendications 1 à 11, **caractérisé en ce que** les moyens de corrélation (15) sont implantés au moins en partie dans un centre d'opérations (4).

14. Système selon la revendication 13, **caractérisé en ce que** le centre d'opérations (4) est raccordé à l'engin de remorquage (2) par une liaison radioélectrique bidirectionnelle (16).

15. Système selon l'une quelconque des revendications précédentes, **caractérisé en ce que** l'engin sous-marin (1) comporte un capteur de profondeur d'immersion (14).

16. Système selon l'une quelconque des revendications précédentes, **caractérisé en ce que** l'engin sous-marin (1) comporte un échosondeur (12).

17. Système selon l'une quelconque des revendications précédentes, **caractérisé en ce que** l'engin de remorquage est un engin inhabité.

18. Système selon l'une quelconque des revendications précédentes, **caractérisé en ce que** les moyens de transmission d'informations (3) comprennent un réseau filaire.

19. Système selon l'une quelconque des revendications 1 à 17, **caractérisé en ce que** les moyens de transmission d'informations (3) comprennent un réseau optique.

20. Système selon l'une quelconque des revendications précédentes, **caractérisé en ce que** la référence de temps commune est un signal de synchronisation du fonctionnement des moyens de positionnement (5,6), des moyens de localisation (7,8) et de la centrale d'attitude et de cap (9) de l'engin sous-marin (1).

21. Système selon les revendications 7 ou 8 et 20, **caractérisé en ce que** la référence de temps commune forme également un signal de synchronisation du fonctionnement des moyens d'exploration (11).

22. Système selon l'une quelconque des revendications 1 à 19, **caractérisé en ce que** la référence de temps commune forme un signal de datation des informations délivrées par les moyens de positionnement (5,6), des moyens de localisation (7,8) et de la centrale d'attitude et de cap (9) de l'engin sous-marin, utilisés par des moyens électroniques (20) de datation de ces informations.

23. Système selon les revendications 7 ou 8 et 22, **caractérisé en ce que** la référence de temps commune forme également un signal de datation des informations délivrées par les moyens d'exploration (11), utilisés par des moyens électroniques (20) de datation de ces informations.

24. Système selon l'une quelconque des revendications précédentes, **caractérisé en ce que** l'engin de remorquage (2) comporte également une centrale d'attitude et de cap.

25. Système selon la revendication 24, **caractérisé en ce que** la centrale d'attitude et de cap est une centrale inertielle.

26. Système selon la revendication 24 ou 25, **caractérisé en ce que** la centrale d'attitude et de cap embarquée à bord de l'engin de remorquage (2) est associée à des moyens de recalage à partir d'informations de vitesse et/ou de position, délivrées par les moyens de corrélation et/ou les moyens de positionnement en coordonnées géographiques absolues.

27. Système selon l'une quelconque des revendications précédentes, **caractérisé en ce que** l'engin sous-marin est un engin sous-marin remorqué.

28. Système selon l'une quelconque des revendications 1 à 26, **caractérisé en ce que** l'engin sous-marin est un engin sous-marin autopropulsé.

## Patentansprüche

1. System zur Bestimmung der absoluten Position eines geschleppten oder selbstangetriebenen Unterwasserfahrzeugs (1), wobei dieses Unterwasserfahrzeug (1) mittels eines Abschleppkabels und bidirektionaler Informationsübertragungsmittel (3) mit einem Abschleppfahrzeug (2) verbunden ist,
wobei das Abschleppfahrzeug (2) Mittel (5, 6) der absoluten Position in geografischen Koordinaten aufweist, die Positionsinformationen desselben in geografischen Koordinaten bereitstellen, wobei die Mittel (5, 6) der absoluten Position in geografischen Koordinaten des Abschleppfahrzeugs (2) einen Funklokalisierungsempfänger (5) desselben umfassen,
wobei das Unterwasserfahrzeug (1) Mittel (8) der relativen Lokalisierung in Bezug auf das Abschleppfahrzeug (2), die Informationen der relativen Lokalisierung dieses Unterwasserfahrzeugs (1) in Bezug auf das Abschleppfahrzeug (2) bereitstellen, und eine Lage- und Kurszentrale (9), die Lage- und Kursinformationen dieses Unterwasserfahrzeugs bereitstellt, aufweist, wobei diese Lokalisierungsmittel (8), die Lage- und Kurszentrale (9) eine Trägheitszentrale sind,
wobei das System ebenfalls Korrelationsmittel (9; 19; 15) der Positionsinformationen des Abschleppfahrzeugs, der Lokalisierungs-, Lage- und Kursinformationen zwecks Bereitstellung von Informationen der absoluten Position des Unterwasserfahrzeugs (1) und um vorzugsweise ebenfalls Geschwindigkeitsinformationen des Unterwasserfahrzeugs bereitzustellen, aufweist,
**dadurch gekennzeichnet, dass** diese Zentrale (9) und diese Positionsmittel (5, 6) eine gemeinsame Zeitreferenz teilen, die zwischen dem Abschleppfahrzeug (2) und dem Unterwasserfahrzeug (1) aufgeteilt ist, wobei die gemeinsame Zeitreferenz ein von dem Funklokalisierungsempfänger (5) ausgegebenes Zeitsignal ist,
und dass das System Neujustierungsmittel der Lage- und Kurszentrale (9) des Unterwasserfahrzeugs (1) auf der Basis von den Korrelationsmitteln ausgegeben Informationen über die absolute Position und/oder Geschwindigkeit desselben aufweist.

2. System nach Anspruch 1, **dadurch gekennzeichnet, dass** der Funklokalisierungsempfänger ein Satelliten-Funklokalisierungsempfänger (5) ist.

3. System nach Anspruch 1, **dadurch gekennzeichnet, dass** der Funklokalisierungsempfänger ein Funklokalisierungsempfänger mittels terrestrischer Stationen ist.

4. System nach einem der vorangehenden Ansprüche, **dadurch gekennzeichnet, dass** die Mittel (8) der relativen Lokalisierung des Unterwasserfahrzeugs (1) in Bezug auf das Abschleppfahrzeug (2) ein Distanz- und Goniometer mit akustischen Wellen umfassen, von dem ein Wellensendeteil (7) auf dem Abschleppfahrzeug (2) montiert ist und von dem ein Wellenempfangsteil (8) auf dem Unterwasserfahrzeug (1) montiert ist.

5. System nach einem der vorangehenden Ansprüche, **dadurch gekennzeichnet, dass** das Zeitsignale von den im System integrierten lokalen Generationsmitteln ausgegeben wird.

6. System nach einem der vorangehenden Ansprüche, **dadurch gekennzeichnet, dass** die Korrelationsmittel (9; 19; 15) ferner an Bestimmungsmittel von Positionskorrekturinformationen des Wellensendeteils (7) des Distanz- und Goniometers in Bezug auf den Funklokalisierungsempfänger (5) auf dem Abschleppfahrzeug (2) angeschlossen sind.

7. System nach einem der vorangehenden Ansprüche, **dadurch gekennzeichnet, dass** das Unterwasserfahrzeug (1) mit Explorationsmitteln (11) der Unterwasserumwelt ausgestattet ist.

8. System nach Anspruch 7, **dadurch gekennzeichnet, dass** die Explorationsmittel (11) mindestens ein Organ umfassen, das aus der Gruppe ausgewählt ist, die umfasst:
- ein Sonar,
- einen Sondierer,
- einen Laserscanner,
- eine Kamera und
- einen magnetometrischen oder gravimetrischer Sensor.

9. System nach einem der Ansprüche 1 bis 6 und 7 oder 8, **dadurch gekennzeichnet, dass** die Korrelationsmittel (9; 19; 15) ferner an Bestimmungsmittel von Positionskorrekturinformationen der Explorationsmittel (11) in Bezug auf den Akustikwellenempfangsteil (8) des Distanz- und Goniometers auf dem Unterwasserfahrzeug (1) angeschlossen sind.

10. System nach einem der vorangehenden Ansprüche, **dadurch gekennzeichnet, dass** die Korrelationsmitteln mindestens zum Teil im Abschleppfahrzeug (2) integriert sind.

11. System nach einem der Ansprüche 1 bis 9, **dadurch gekennzeichnet, dass** die Korrelationsmittel (9; 19) mindestens zum Teil im Unterwasserfahrzeug (1) integriert sind.

12. System nach Anspruch 11, **dadurch gekennzeichnet, dass** mindestens ein Teil der Korrelationsmittel in der Lage- und Kurszentrale (9) des Unterwasserfahrzeugs (1) integriert ist.

13. System nach einem der Ansprüche 1 bis 11, **dadurch gekennzeichnet, dass** die Korrelationsmittel (15) mindestens zum Teil in einem Maßnahmenzentrum (4) integriert sind.

14. System nach Anspruch 13, **dadurch gekennzeichnet, dass** das Maßnahmenzentrum (4) mittels einer bidirektionalen funkelektrischen Verbindung (16) an das Abschleppfahrzeug (2) gekoppelt ist.

15. System nach einem der vorangehenden Ansprüche, **dadurch gekennzeichnet, dass** das Unterwasserfahrzeug (1) eine Eintauchtiefesensor (14) aufweist.

16. System nach einem der vorangehenden Ansprüche, **dadurch gekennzeichnet, dass** das Unterwasserfahrzeug (1) ein Echolot (12) aufweist.

17. System nach einem der vorangehenden Ansprüche, **dadurch gekennzeichnet, dass** das Abschleppfahrzeug ein unbewohntes Fahrzeug ist.

18. System nach einem der vorangehenden Ansprüche, **dadurch gekennzeichnet, dass** die Informationsübertragungsmittel (3) ein drahtgebundenes Netz umfassen.

19. System nach einem der Ansprüche 1 bis 17, **dadurch gekennzeichnet, dass** die Informationsübertragungsmittel (3) ein optisches Netz umfassen.

20. System nach einem der vorangehenden Ansprüche, **dadurch gekennzeichnet, dass** die gemeinsame Zeitreferenz ein Synchronisierungssignal der Funktion der Positionsmittel (5, 6), der Lokalisierungsmittel (7, 8) und der Lage- und Kurszentrale (9) des Unterwasserfahrzeugs (1) ist.

21. System nach den Ansprüchen 7 oder 8 und 20, **dadurch gekennzeichnet, dass** die gemeinsame Zeitreferenz ebenfalls ein Synchronisierungssignal der Funktion der Explorationsmittel (11) bildet.

22. System nach einem der Ansprüche 1 bis 19, **dadurch gekennzeichnet, dass** die gemeinsame Zeitreferenz ein Datierungssignal der von den Positionsmitteln (5, 6), Lokalisierungsmitteln (7, 8) und der Lage- und Kurszentrale (9) des Unterwasserfahrzeugs, die von elektronischen Datierungsmitteln (20) dieser Informationen verwendet werden, bereitgestellten Informationen bildet.

23. System nach den Ansprüchen 7 oder 8 und 22, **dadurch gekennzeichnet, dass** die gemeinsame Zeitreferenz ebenfalls ein Datierungssignal der von den Explorationsmitteln (11), die von elektronischen Datierungsmitteln (20) dieser Informationen verwendet werden, bereitgestellten Informationen bildet.

24. System nach einem der vorangehenden Ansprüche, **dadurch gekennzeichnet, dass** das Abschleppfahrzeug (2) ebenfalls eine Lage- und Kurszentrale aufweist.

25. System nach Anspruch 24, **dadurch gekennzeichnet, dass** die Lage- und Kurszentrale eine Trägheitszentrale ist.

26. System nach Anspruch 24 oder 25, **dadurch gekennzeichnet, dass** die On-Board-Lage- und Kurszentrale des Abschleppfahrzeugs (2) Mitteln der Neujustierung auf der Basis von Geschwindigkeits- und/oder Positionsinformationen, die von den Korrelationsmitteln und/oder den Positionsmitteln in absoluten geografischen Koordinaten bereitgestellt werden, zugeordnet ist.

27. System nach einem der vorangehenden Ansprüche, **dadurch gekennzeichnet, dass** das Unterwasserfahrzeugs ein geschlepptes Unterwasserfahrzeug ist.

28. System nach einem der Ansprüche 1 bis 26, **dadurch gekennzeichnet, dass** das Unterwasserfahrzeugs ein selbstangetriebenes Unterwasserfahrzeug ist.

## Claims

1. A system for determining the absolute position of a towed or self-propelled underwater vehicle (1), wherein this underwater vehicle (1) is connected to a towing vehicle (2), by a towline and two-way information transmission means (3),
the towing vehicle (2) including absolute positioning means (5, 6) and geographical coordinates delivering position information on the latter in geographical coordinates, the geographical coordinate positioning means (5, 6) of the towing vehicle (2) comprising a radio location receiver (5) thereof,
the underwater vehicle (1) including relative localization means (8) with respect to the towing vehicle (2), delivering relative localization information of this underwater vehicle (1) with respect to the towing vehicle (2) and an attitude and heading unit (9) delivering attitude and heading information for this underwater vehicle, these localization means (8), the attitude and heading unit (9) being an inertial unit,
the system also including means (9; 19; 15) for correlating position information of the towing vehicle, localization information, attitude and heading information to deliver absolute position information of the underwater vehicle (1) and advantageously also to deliver speed information of the underwater vehicle,
**characterized in that** this unit (9) and these positioning means (5, 6) share a common time reference distributed between the towing vehicle (2) and the underwater vehicle (1), the common time reference being a clock signal from the radio location receiver (5),
and **in that** the system includes means for recalibrating the attitude and heading unit (9) of the underwater vehicle (1) from absolute position and/or speed information thereof from the correlating means.

2. The system according to claim 1, **characterized in that** the radio location receiver is a satellite radio location receiver (5).

3. The system according to claim 1, **characterized in that** the radio location receiver is a land station-based radio location receiver.

4. The system according to any one of the preceding claims, **characterized in that** the means (8) for relative localization of the underwater vehicle (1) with respect to the towing vehicle (2) comprise an acoustic wave distance measurer-goniometer, whereof a wave transmission part (7) is mounted on the towing vehicle (2) and whereof a wave receiving part (8) is mounted on the underwater vehicle (1).

5. The system according to any one of the preceding claims, **characterized in that** the clock signal is from local generating means installed in the system.

6. The system according to any one of the preceding claims, **characterized in that** the correlating means (9; 19; 15) are further connected to means for determining position correction information of the wave transmission part (7) of the distance measurer-goniometer, relative to the radio location receiver (5), on the towing vehicle (2).

7. The system according to any one of the preceding claims, **characterized in that** the underwater vehicle (1) is equipped with means (11) for exploring the underwater environment.

8. The system according to claim 7, **characterized in that** the exploration means (11) comprise at least one member chosen from the group comprising:
- a sonar,
- a sounder,
- a laser scanner,
- a camera, and
- a magnetoelectric or gravimetric sensor.

9. The system according to any one of claims 1 to 6 and 7 or 8, **characterized in that** the correlating means (9; 19; 15) are further connected to means for determining position correction information of the exploration means (11), relative to the acoustic wave receiving part (8) of the distance measurer-goniometer, on the underwater vehicle (1).

10. The system according to any one of the preceding claims, **characterized in that** the correlating means are installed at least partially in the towing vehicle (2).

11. The system according to any one of claims 1 to 9, **characterized in that** the correlating means (9; 19) are installed at least partially in the underwater vehicle (1).

12. The system according to claim 11, **characterized in that** at least part of the correlating means is integrated into the attitude and heading unit (9) of the underwater vehicle (1).

13. The system according to any one of claims 1 to 11, **characterized in that** the correlating means (15) are based partially in an operations center (4).

14. The system according to claim 13, **characterized in that** the operations center (4) is connected to the towing vehicle (2) by a two-way wireless link (16).

15. The system according to any one of the preceding claims, **characterized in that** the underwater vehicle (1) includes an immersion depth sensor (14).

16. The system according to any one of the preceding claims, **characterized in that** the underwater vehicle (1) includes a sonic depth finder (12).

17. The system according to any one of the preceding claims, **characterized in that** the towing vehicle is an inhabited vehicle.

18. The system according to any one of the preceding claims, **characterized in that** the information transmission means (3) comprise a wired network.

19. The system according to any one of claims 1 to 17, **characterized in that** the information transmission means (3) comprise an optical work.

20. The system according to any one of the preceding claims, **characterized in that** the common time reference is a synchronization signal for the operation of the positioning means (5, 6), localization means (7, 8) and the attitude and heading unit (9) of the underwater vehicle (1).

21. The system according to claims 7 or 8 and 20, **characterized in that** the common time reference also forms a synchronization signal of the operation of the exploration means (11).

22. The system according to any one of claims 1 to 19, **characterized in that** the common time reference forms a dating signal for the information delivered by the positioning means (5, 6), localization means (7, 8) and the attitude and heading unit (9) of the underwater vehicle, used by electronic means (20) for dating this information.

23. The system according to claims 7 or 8 and 22, **characterized in that** the common time reference also forms a signal for dating information delivered by the exploration means (11), used by electronic means (20) for dating this information.

24. The system according to any one of the preceding claims, **characterized in that** the towing vehicle (2) also includes an attitude and heading unit.

25. The system according to claim 24, **characterized in that** the attitude and heading unit is an inertial unit.

26. The system according to claim 24 or 25, **characterized in that** the attitude and heading unit on board the towing vehicle (2) is associated with recalibration means from speed and/or position information, delivered by the correlating means and/or the positioning means in absolute geographical coordinates.

27. The system according to any one of the preceding claims, **characterized in that** the underwater vehicle is a towed underwater vehicle.

28. The system according to any one of claims 1 to 26, **characterized in that** the underwater vehicle is a self-propelled underwater vehicle.
